# EUROPÄISCHE PATENTSCHRIFT

(11) **EP 0 537 416 B1**
(45) Veröffentlichungstag und Bekanntmachung des Hinweises auf die Patenterteilung: **12.03.1997**
(21) Anmeldenummer: 92109788.7
(22) Anmeldetag: 11.06.1992
(51) Int. Cl.: D21C 5/02, D21B 1/32

(54) **Verfahren zur Behandlung von Faserstoff**
Process for the treatment of pulp
Procédé pour le traitement de pâte à papier

(30) Priorität: 13.09.1991 DE 4130472
(43) Veröffentlichungstag der Anmeldung: 21.04.1993
(73) Patentinhaber: Voith Sulzer Stoffaufbereitung GmbH, 88191 Ravensburg (DE)
(72) Erfinder: Lambrecht, Gerhard, W-7981 Fronreute-Blitzenreute (DE)

(56) Entgegenhaltungen:
- EP-A- 0 284 526
- DE-A- 3 116 905
- DE-A- 3 501 943
- DE-B- 2 813 448

## Beschreibung

Die Erfindung betrifft ein Verfahren zur Behandlung von Faserstoff gemäß Oberbegriff des Anspruchs 1.

Mit derartigen Verfahren wird in der Regel beabsichtigt, die in der Suspension enthaltenen Störstoffe, insbesondere die feinen Feststoffpartikel zu entfernen. Solche Partikel stammen z.B. von der Druckfarbe oder von den Füllstoffen der eingetragenen Altpapiersorte. In der Papierindustrie werden solche Bestandteile, die nicht brennbar sind, als Asche bezeichnet, da sie bei Laboruntersuchungen als unverbrannte Rückstände ermittelt werden. Es gibt darüberhinaus auch brennbare, feine Feststoffe im Altpapier, die zumeist Faserbruchstücke sind.

Als weitere stark störende Bestandteile können klebende Verunreinigungen, sogenannte Stickies im Altpapier vorhanden sein, die in der genannten Primärflotation erfaßt werden können.

Neben den Anforderungen an die Aufbereitung des Faserstoffes, die Farbpartikel zu entfernen, da sie teils zum Vergrauen des fertigen Papieres führen, teils als sichtbare Schmutzpunkte stören, kann es erforderlich sein, daß auch die an sich optisch nicht störenden Stoffe aus papiertechnologischen Gründen beseitigt werden. Die Anforderungen bezüglich des Gehalts derartiger Stoffe richten sich nach dem Verwendungszweck des erzeugten Papieres.

Die im Altpapiereintrag enthaltenen Mengen von Asche können relativ hoch sein. Dann müssen ggfs. auch die Verfahren zu ihrer Entfernung auf relativ große abzuführende Mengen abgestimmt werden.

Bei den hier betrachteten bekannten Verfahren wird der aus der Sekundärstufe, also der Sekundärflotationsanlage, kommende Gutstoff ohne weiteres vor die Primärstufe zurückgeführt, d.h. dem Einlauf der Primärstufe wieder zugemischt. Durch die abermalige Flotationsbehandlung sollen dann die so zurückgeführten Verunreinigungen entfernt werden. Der aus der Sekundärstufe kommende Reject wird in der Regel verworfen. Bekannt ist ein solches Verfahren z.B. aus dem Fachaufsatz "Verfahrenstechnik Deinking", in dem Wochenblatt für Papierfabrikation, 6, 1991, S. 183 - 190. Verfahrenstechnisch betrachtet bringt der Einsatz der Sekundärstufe bei solchen Schaltungen einen Rückgewinn von im Schaumüberlauf enthaltenen Faserstoff. Aus einer exemplarischen Mengenbilanz ergibt sich für eine gesamte Stoffaufbereitungsanlage eine Ausbeute von 90 %. Dieses Verfahren ist zwar geeignet, gewisse Mengen von Farbpartikeln aus dem Stoffkreislauf zu entfernen, kann aber nicht immer die Anforderungen erfüllen, die bei der Entfernung großer Aschemengen gestellt werden müssen. Auch wird die Flotationskapazität durch Mehrfachdurchgang eines Teils der Schmutzfracht stark belastet.

Es ist Aufgabe der Erfindung, ein wirtschaftliches Verfahren zu schaffen, mit dem die Primarstufe mengenmäßig entlasted wird und das es bei Einhaltung bestimmter Betriebsbedingungen ermöglichen kann eine größere Menge von feinen Verunreinigungen, insbesondere der sogenannten Asche, aus dem Altpapier zu entfernen.

Diese Aufgabe wird durch die Kennzeichen des Anspruchs 1 erfüllt.

Die Kapazität der primären Flotationsstufe wird besser ausgenutzt, wenn der Gutstoff aus der Sekundärstufe dem Stoffstrom nicht mehr wie im Stand der Technik vor sondern hinter der Primärflotation zurückgegeben wird.

Die Bedingungen für den zusätzlichen Reinigungsschritt können zweckmäßig so eingestellt sein, daß aus dem Schaum der Sekundärflotation genügend Druckfarbenpartikel ausgewaschen werden, damit bei der erwähnten Zuleitung zum Hauptstoffstrom keine Verschlechterung der Qualität bezüglich der Schmutzpunkte erfolgen kann. Die Überlegung ist die, daß wegen der Unterlassung der Zurückführung des Stoffes vor die Primärflotation dieser bereits gut genug sein muß, um mit dem Gutstoff der Primärflotation ohne Nachteile vermischt werden zu können. Wie die exemplarische Mengenbilanz, angewendet auf dieses neue Verfahren nun zeigt, ist die Ausbeute der ganzen Anlage von 90 auf 84 % gesunken, was logisch ist, da der Stoff stärker entascht wurde. Der wichtige Vorteil der neuen Verfahrensführung ist, daß der Aschegehalt wesentlich geringer ist. Anstelle von 13,7 % Asche ist nur noch ein Anteil von 10,9 % Asche im Stoff enthalten.

Das neu vorgeschlagene Verfahren setzt mit Vorteil mit einem weiteren Reinigungsschritt dort an, wo waschbare Verunreinigungen besonders konzentriert vorliegen und damit die ausgewaschenen Mengen hoch sein können. Diese Stufe ist dann so wirksam, daß der dabei herauskommende Gutstoff dem Stoff nach der Primärflotation zugegeben werden kann, so daß letztere auch mengenmäßig entlastet wird.

In vielen Fällen kann eine Sortierung vor oder nach der Sekundärzelle sinnvoll sein. Zwischen der Sekundärzelle und dem Wäscher ist auch der Einsatz von Leicht- und Schwerteil-Cleanern sinnvoll, insbesondere für die Entfernung klebender Verunreinigungen, den sog. Stickies. Das Abwasser aus der Waschstufe kann über Klärflotation oder Mikroflotation gereinigt werden.

Eine besonders wirksame Kombination ist die, daß die Sekundärflotationszellen bewußt als "Schmutzpunkt-Zellen" ausgelegt, also auf weniger feine Partikel optimiert sind, da die nachfolgende Reinigungsstufe speziell die feineren Partikel erfassen kann. Solche "Schmutzpunkt-Zellen" sind z.B. so gestaltet, daß relativ große Luftblasen zur Suspension zugemischt werden, weil diese besonders gut für die Flotation von Teilchen im Größenbereich 0,06 bis 0,3 mm geeignet sind.

Das erfindungsgemäße Verfahren ist auch anwendbar, wenn die Faserstoffsuspension nach der Primärflotation einer Dispergierbehandlung unterzogen wird, in der die Schmutzpartikel von den Fasern abgetrennt und eventuell weiter zerkleinert werden. Eine weitere folgende Flotationsstufe kann dann nämlich die so flotierbar gemachten Partikel entfernen und ebenfalls zu einem in dem erfinderischen Verfahren behandelbaren Flotationsschaum führen.

Die Erfindung wird erläutert durch folgende Zeichnungen:
- Figur 1:: Schema einer Form des Verfahrens
- Fig.2 - 4:: schematische Darstellungen von Anlagen zur Ausführung in verschiedenen Ausgestaltungen
- Figur 5:: Ausschnitt einer Variante von Figur 4
- Figur 6:: Schema einer weiteren Anwendung.

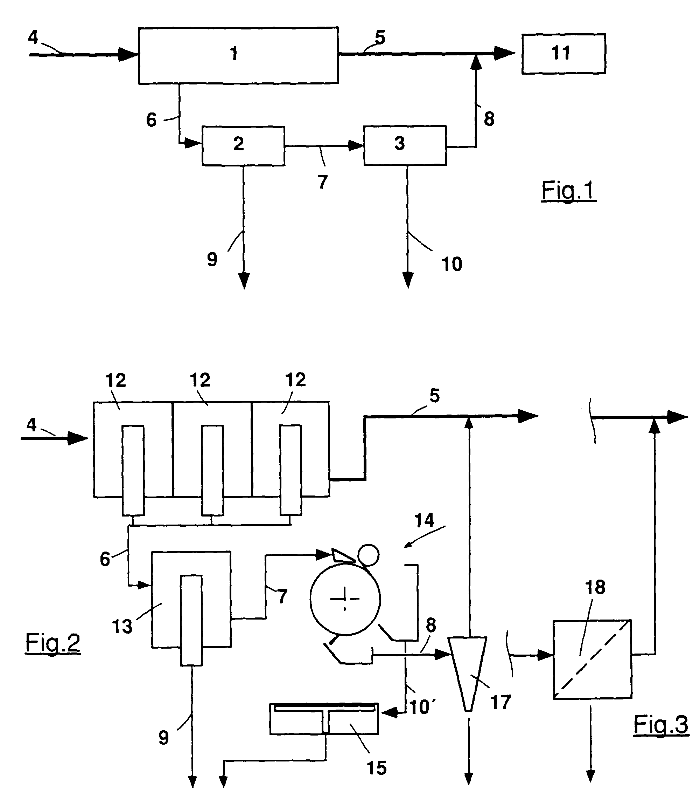

Figur 1 zeigt das allgemeine Schema für das erfindungsgemäße Verfahren. Die Fasersuspension 4 gelangt in die Primärflotation 1, aus der der Gutstoff 5 sowie der Flotationsschaum 6 abgeführt werden. Letzterer wird der Sekundärflotation 2 zugeleitet. Bei Ableitung des Flotationsschaumes 9 folgt für die gereinigte Faserstoffsuspension 7 der weitere Reinigungsschritt 3, in dem ein Reject 10 anfällt. Der Gutstoff 8 dieses Reinigungsschritts kann nun mit dem Gutstoff 5 vermischt und der nachfolgenden weiteren Faserstoffaufbereitung 11 zugeführt werden.

Figur 2 zeigt schematisch eine Anlage zur Durchführung des Verfahrens mit einer Anzahl von Flotationszellen 12, die der Durchführung der primären Flotation dienen. Der Flotationsschaum 6 der ersten Stufe gelangt in mindestens eine weitere für die Sekundärflotation geeignete Zelle 13. Der Gutstoff 7 wird hier in einer nachfolgenden Waschvorrichtung 14 ausgewaschen. Das die Verunreinigungen enthaltende Abwasser 10' wird - wie zwar gezeigt, aber nicht unbedingt erforderlich - in einer Klärflotationsanlage 15 so weit von den Verunreinigungen befreit, daß es als Rückwasser in der Papierfabrik verwendbar ist. Der anfallende Klärschlamm muß normalerweise entsorgt werden. Der Gutstoff 8 aus der Waschanlage 14 kann nun direkt mit dem Gutstoff 5 vermischt werden oder vorher noch in einer Cleaner-Anlage 17 von restlichen noch enthaltenden schweren Verunreinigungen befreit werden. Es ist auch denkbar, daß zusätzlich oder alternativ ein Sortierer 18 ( Figur 3) eingesetzt wird.

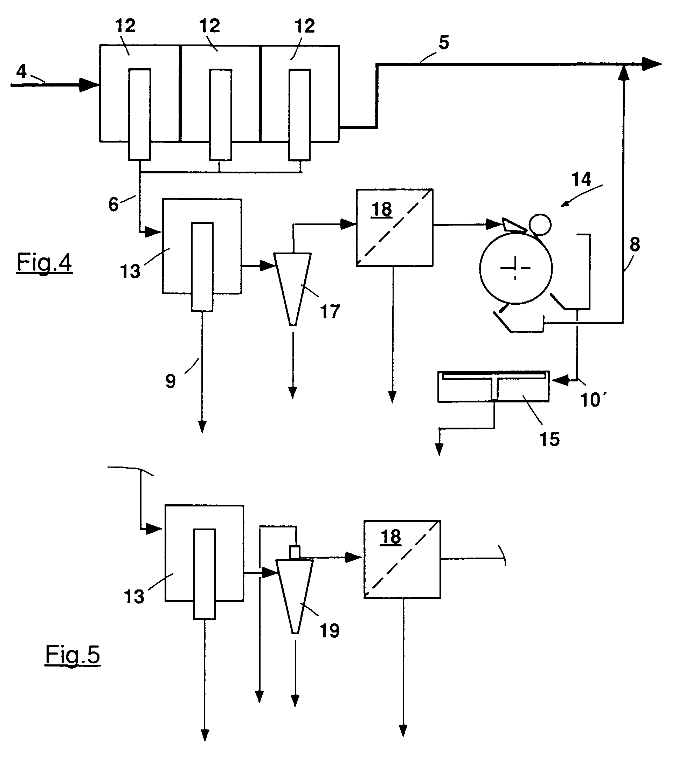

Wie Figur 4 zeigt, kann es von Vorteil sein, zwischen der Sekundärflotationszelle 13 und der zusätzlichen Reinigungsstufe 3 den Stoff noch stärker zu reinigen: z. B. durch Cleaner17 und Sortierer 18 . Als weitere Variante kann der Einsatz von zweiseitigen Cleanern 19 ebenfalls vorgenommen werden, wodurch sowohl Schwer- als auch Leichtteile aus diesem stark mit Schmutz angereicherten Stoffstrom ausgeschieden werden können. Es ergeben sich wesentliche Effektivitätsvorteile durch den hohen Schmutzstoffgehalt (Fig. 5).

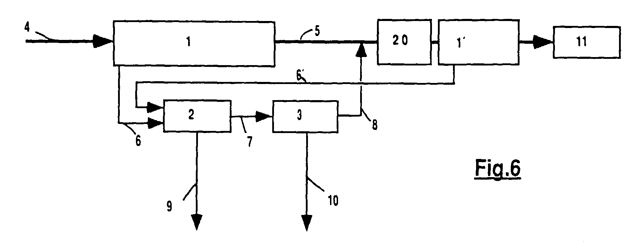

Fig. 6 zeigt schematisch die Anwendung auf eine Aufbereitung mit zwei nacheinandergeschalteten Flotationen (1 und 1'), wobei dazwischen ein Verfahrensschritt 20 ausgeführt wird, durch den die noch vorhandenen Schmutzteilchen von den Papierfasern, an denen sie haften, abgetrennt werden. Es können auch zu große Teilchen zerkleinert werden. In der folgenden Flotation 1' kann der Stoff weiter gereinigt werden. Der daraus stammende Flotationsschaum 6' wird in die Sekundärflotation 2 zurückgeleitet.

## Patentansprüche

1. Verfahren zur Behandlung einer Faserstoffsuspension (4), insbesondere Altpapiersuspension, wobei die Suspension nach einer entsprechenden Vorbehandlung einer Primärflotation (1) unterzogen wird, in der mindestens ein Teil der Störstoffe aus der Suspension entfernt und als Flotationsschaum (6) abgeführt wird, so daß die gereinigte Faserstoffsuspension nach der Primärflotation (1) als Gutstoff (5) weitergeführt wird und zur weiteren Faserstoff- Aufbereitung (11) gelangt, während der Flotationsschaum (6) als Reject abgeführt und einer Sekundärflotation (2) unterzogen wird, welche wiederum eine Trennung in gereinigte Faserstoffsuspension (7) und Störstoff enthaltenden Flotationsschaum (9) durchführt,
**dadurch gekennzeichnet,**
daß die durch Sekundärflotation (2) gereinigte Faserstoffsuspension (7) als Gutstoff der Sekundärflotation mindestens einem weiteren Reinigungsschritt (3) unterzogen wird, dessen Gutstoff (8) zur weiteren auch den Gutstoff (5) der Primärflotation (1) aufnehmenden Faserstoff- Aufbereitung (11) geführt wird.

2. Verfahren nach Anspruch 1,
**dadurch gekennzeichnet**,
daß der Gutstoff (7) der Sekundärflotation (2) als weiterem Reinigungsschritt (3) in einem Waschvorgang behandelt wird, bei dem aus der Suspension ein Anteil der feinen Verunreinigungen zusammen mit Wasser entfernt wird.

3. Verfahren nach Anspruch 1 oder 2,
**dadurch gekennzeichnet**, daß der Gutstoff (8) aus dem weiteren Reinigungsschritt (3) dem Gutstoff (5) aus der Primärflotation (1) direkt zugemischt und zusammen mit ihm der weiteren Faserstoff- Aufbereitung (11) zugeführt wird.

4. Verfahren nach Anspruch 3 in Verbindung mit Anspruch 2,
**dadurch gekennzeichnet**,
daß die Parameter bei dem Waschvorgang so gewählt werden, daß der Anteil von Farbpartikeln im gewaschenen Gutstoff (8) etwa dem Anteil von Farbpartikeln im Gutstoff (5) der Primärflotation (1) entspricht.

5. Verfahren nach Anspruch 1,
**dadurch gekennzeichnet**,
daß der Gutstoff (7) der Sekundärflotation (2) nicht nur durch einen weiteren Reinigungsschritt (3), sondern auch durch eine Hydrozyklonbehandlung von Schmutzstoffen gereinigt wird.

6. Verfahren nach Anspruch 5,
**dadurch gekennzeichnet**,
daß die Hydrozyklonbehandlung auf die Entfernung von sowohl bezüglich Wasser schwereren als auch leichteren Schmutzstoffen ausgelegt ist.

7. Verfahren nach Anspruch 1,
**dadurch gekennzeichnet**,
daß der Gutstoff (7) der Sekundärflotation (2) nicht nur durch einen weiteren Reinigungsschritt (3), sondern auch durch eine Sortierbehandlung von Schmutzstoffen gereinigt wird.

8. Verfahren nach Anspruch 1,2 oder 3,
**dadurch gekennzeichnet**,
daß die Sekundärflotation (2) bevorzugt für weniger feine Partikel und der weitere Reinigungsschritt (3) für sehr feine Partikel geeignet sind.

9. Verfahren nach einem der vorangehenden Ansprüche,
**dadurch gekennzeichnet**,
daß der Primärflotation (1) im Hauptstrom des Stoffflusses nach einem Schmutzpartikel zerkleinernden oder von den Fasern ablösenden Verfahrensschritt (20) eine weitere Flotation (1') folgt, deren Flotationsschaum (6') im wesentlichen wie der Flotationsschaum (6) der Primärflotation (1) behandelt wird.

10. Verfahren nach einem der Ansprüche 1 bis 8,
**dadurch gekennzeichnet**,
daß in die Sekundärflotation (2) nicht nur der Reject der Primärflotation (1) eingeleitet wird, sondern auch Gutstoff aus Sortierern, welche die Sortierer-Rejecte aus in der Aufbereitungslinie stromabwärts befindlichen Bereichen nachsortieren.

11. Verfahren nach einem der Ansprüche 1 bis 8,
**dadurch gekennzeichnet**,
daß nicht nur der Gutstoff der Sekundärflotation (2) in dem genannten weiteren Reinigungsschritt (3) behandelt wird, sondern auch Gutstoffe aus Sortierern, welche die Sortierer-Rejecte aus in der Aufbereitungslinie stromabwärts befindlichen Bereichen nachsortieren.

12. Anlage zur Durchführung des Verfahrens nach einem der Ansprüche 1 - 8 mit mindestens einer Flotationszelle (12) für die Primärflotation (1), mindestens einer Flotationszelle (13) für die Sekundärflotation (2), einer Schaumabführvorrichtung, welche den Flotationsschaum (6) aus der Flotationszelle (12) für die Primärflotation (1) der Flotationszelle (13) für die Sekundärflotation (2) zuführen kann,
**dadurch gekennzeichnet,**
daß der Gutstoff (7) aus der Flotationszelle (13) für die Sekundärflotation (2) in eine Waschvorrichtung (14) führbar ist, aus der verschmutztes Abwasser (10) anfällt, welches zu einer Klärflotationszelle (15) geführt werden kann und wobei in der Waschvorrichtung (14) ein ausgewaschener Gutstoff (8) gebildet werden kann, welcher direkt oder unter Zwischenschaltung weiterer Reinigungsvorrichtungen dem Gutstoff der Flotationszelle (12) für die Primärflotation (1) zugemischt werden kann.

## Claims

1. A method for the treatment of a fibrous material suspension (4), in particular waste paper suspension, in which the suspension, after a corresponding pre-treatment, is subjected to a primary flotation (1), in which at least a part of the impure materials is removed from the suspension and carried off as flotation scum (6), so that the purified fibrous material suspension after the primary flotation (1) is passed on as stock material and arrives for further fibrous material preparation (11), whilst the flotation scum (6) is carried off as reject and is subjected to a secondary flotation (2), which in turn carries out a separation into purified fibrous material suspension (7) and flotation scum (9) containing impure material,
characterised in that
the fibrous material suspension (7) which is purified by secondary flotation (2), as stock material of the secondary flotation, is subjected to at least one further purification step (3), the stock material (8) of which is passed for further fibrous material preparation (11) also receiving the stock material (5) of the primary flotation (1).

2. A method according to Claim 1,
characterised in that
the stock material (7) of the secondary flotation (2) is treated as a further purification step (3) in a washing process, in which a proportion of the fine impurities together with water is removed from the suspension.

3. A method according to Claim 1 or 2,
characterised in that
the stock material (8) from the further purification step (3) is directly admixed with the stock material (5) from the primary flotation (1) and together therewith is passed on for further fibrous material preparation (11).

4. A method according to Claim 3 in connection with Claim 2,
characterised in that
the parameters in the washing process are selected so that the proportion of colour particles in the washed stock material (8) corresponds approximately to the proportion of colour particles in the stock material (5) of the primary flotation (1).

5. A method according to Claim 1,
characterised in that
the stock material (7) of the secondary flotation (2) is purified not only by a further purification step (3) but also by a hydrocyclone treatment of dirt matter.

6. A method according to Claim 5,
characterised in that
the hydrocyclone treatment is designed for the removal of both heavier and also lighter dirt matter with respect to water.

7. A method according to Claim 1,
characterised in that
the stock material (7) of the secondary flotation (2) is purified not only by a further purification step (3) but also by a sorting treatment of dirt matter.

8. A method according to Claim 1, 2 or 3,
characterised in that
the secondary flotation (2) is preferably suited to less fine particles and the further purification step (3) to very fine particles.

9. A method according to one of the preceding Claims,
characterised in that
the primary flotation (1) in the main stream of the flow of material after a process step (20), comminuting dirt particles or detaching them from the fibres, is followed by a further flotation (1'), the flotation scum (6') of which is treated substantially like the flotation scum (6) of the primary flotation (1).

10. A method according to one of Claims 1 to 8,
characterised in that
not only is the reject of the primary flotation (1) introduced into the secondary flotation (2), but also stock material from sorters which subsequently sort the sorter rejects from zones situated donwnstream in the preparation line.

11. A method according to one of Claims 1 to 8,
characterised in that
not only the stock material of the secondary flotation (2) is treated in the said further purification step (3), but also stock materials from sorters which subsequently sort the sorter rejects from zones situated downstream in the preparation line.

12. An installation to carry out the method according to one of Claims 1-8 with at least one flotation cell (12) for the primary flotation (1), at least one flotation cell (13) for the secondary flotation (2), a scum removal device, which can supply the flotation scum (6) from the flotation cell (12) for the primary flotation (1) to the flotation cell (13) for the secondary flotation (2),
characterised in that
the stock material (7) from the flotation cell (13) for the secondary flotation (2) is able to be directed into a washing device (14), from which contaminated waste water (10) is produced which can be directed to a clarifying flotation cell (15) and in which in the washing device (14) a washed stock material (8) can be formed, which can be admixed with the stock material of the flotation cell (12) for the primary flotation (1) directly or with the intercalation of further purificiation devices.

## Revendications

1. Procédé de traitement d'une suspension de pâte à papier (4), en particulier d'une suspension de vieux papiers, la suspension étant soumise, après un traitement préliminaire approprié, à une flottation primaire (1), dans laquelle une partie au moins des substances gênantes est éliminée de la suspension et évacuée en tant que mousse de flottation (6), de sorte que la suspension de pâte à papier épurée est transportée après la flottation primaire (1) en tant que pâte à papier finie et parvient à la préparation de pâte à papier (11) complémentaire, tandis que la mousse de flottation (6) est évacuée en tant que rejet et soumise à une flottation secondaire (2), qui opère à nouveau une séparation en suspension de pâte à papier épurée (7) et mousse de flottation (9) contenant des matières gênantes, caractérisé en ce que la suspension de pâte à papier (7) épurée par flottation secondaire (2) est soumise en tant que pâte à papier finie de la flottation secondaire à au moins une autre étape d'épuration (3), dont la pâte à papier finie (8) est envoyée à la préparation de pâte à papier (11) complémentaire recevant aussi la pâte à papier finie (5) de la flottation primaire (1).

2. Procédé selon la revendication 1, caractérisé en ce que la pâte à papier finie (7) de la flottation secondaire (2) est traitée en tant qu'étape d'épuration (3) complémentaire dans une opération de lavage, au cours de laquelle une partie des fines impuretés est éliminée de la suspension avec de l'eau.

3. Procédé selon la revendication 1 ou 2, caractérisé en ce que la pâte à papier finie (8) provenant de l'étape d'épuration (3) complémentaire est directement mélangée à la pâte à papier finie (5) provenant de la flottation primaire (1) et est envoyée avec celle-ci à la préparation de pâte à papier (11) complémentaire.

4. Procédé selon la revendication 3 en liaison avec la revendication 2, caractérisé en ce que les paramètres de l'opération de lavage sont choisis de manière que la proportion de particules d'encre dans la pâte à papier finie (8) lavée corresponde à peu près à la proportion de particules d'encre dans la pâte à papier finie (5) de la flottation primaire (1).

5. Procédé selon la revendication 1, caractérisé en ce que la pâte à papier finie (7) de la flottation secondaire (2) est débarrassée des matières polluantes, non seulement par une étape d'épuration (3) complémentaire, mais aussi par un traitement à l'hydrocyclone.

6. Procédé selon la revendication 5, caractérisé en ce que le traitement à l'hydrocyclone est conçu pour l'élimination de substances polluantes aussi bien plus lourdes que plus légères que l'eau.

7. Procédé selon la revendication 1, caractérisé en ce que la pâte à papier finie (7) de la flottation secondaire (2) est épurée non seulement par une étape d'épuration (3) complémentaire, mais aussi par un traitement d'élimination des substances polluantes.

8. Procédé selon les revendications 1, 2 ou 3, caractérisé en ce que la flottation secondaire (2) convient de préférence à des particules moins fines et l'étape d'épuration (3) complémentaire à des particules très fines.

9. Procédé selon l'une des revendications précédentes, caractérisé en ce que la flottation primaire (1) dans le courant principal du flux-de matières, après une étape de procédé (20) fragmentant les particules polluantes ou les détachant des fibres, est suivie d'une autre flottation (1') dont la mousse de flottation (6') est traitée sensiblement comme la mousse de flottation (6) de la flottation primaire (1).

10. Procédé selon l'une des revendications 1 à 8, caractérisé en ce que dans la flottation (2) est introduit non seulement le rejet de la flottation primaire (1), mais aussi la pâte à papier finie provenant d'épurateurs, qui trient encore les rejets des épurateurs de zones se trouvant en aval dans la ligne de préparation.

11. Procédé selon l'une des revendications 1 à 8, caractérisé en ce que non seulement la pâte à papier finie de la flottation secondaire (2) est traitée dans l'autre étape d'épuration (3), mais aussi des pâtes à papier finies provenant d'épurateurs qui trient encore les rejets des épurateurs de zones se trouvant en aval dans la ligne de préparation.

12. Installation pour la mise en oeuvre du procédé selon l'une des revendications 1 à 8 avec au moins une cellule de flottation (12) pour la flottation primaire (1), au moins une cellule de flottation (13) pour la flottation secondaire (2), un dispositif d'évacuation de mousse, qui peut envoyer la mousse de flottation (6) à partir de la cellule. de flottation (12) pour la flottation primaire (1) à la cellule de flottation (13) pour la flottation secondaire (2), caractérisée en ce que la pâte à papier finie (7) peut être acheminée de la cellule de flottation (13) pour la flottation secondaire (2) dans un dispositif de lavage (14), qui donne lieu à des eaux usées (10) polluées, qui peuvent être envoyées à une cellule de flottation de décantation (15) et dans le dispositif de lavage (14) pouvant être formée une pâte à papier finie (8) lavée, qui peut être ajoutée directement ou par l'intermédiaire d'autres dispositifs d'épuration, à la pâte à papier finie de la cellule de flottation (12) pour la flottation primaire (1).
